(19)

Europäisches Patentamt
European Patent Office
Office européen des brevets

(11) **EP 1 742 286 A1**

(12) **EUROPEAN PATENT APPLICATION**

(43) Date of publication:
**10.01.2007 Bulletin 2007/02**

(51) Int Cl.:
*H01M 8/02* (2006.01)      *H01M 4/88* (2006.01)
*H01M 8/10* (2006.01)

(21) Application number: **06011865.0**

(22) Date of filing: **08.06.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **10.06.2005 JP 2005170798**

(71) Applicants:
- **Japan Atomic Energy Agency**
  Naka-gun,
  **Ibaraki 319-1184 (JP)**
- **NITTO DENKO CORPORATION**
  Ibaraki-shi,
  **Osaka 567-8680 (JP)**

(72) Inventors:
- **Asano, Masaharu**
  Takasaki-shi,
  **Gunma 370-1292 (JP)**

- **Yamaki, Tetsuya**
  Takasaki-shi,
  **Gunma 370-1292 (JP)**
- **Yoshida, Masaru**
  Takasaki-shi,
  **Gunma 370-1292 (JP)**
- **Tachibaba, Toshimitsu**
  Ibaraki-shi,
  **Osaka 567-8680 (JP)**
- **Nishiyama, Soji**
  **Ibaraki-shi, Osaka 567-8680 (JP)**
- **Nagai, Yozo**
  **Ibaraki-shi, Osaka 567-8680 (JP)**

(74) Representative: **Pfenning, Meinig & Partner GbR**
**Patent- und Rechtsanwälte**
**Theresienhöhe 13**
**80339 München (DE)**

(54) **Crosslinked polymer electrolyte fuel cell membranes and their producing process**

(57)    A polymer electrolyte membrane produced by a process in which a monofunctional vinyl monomer into which sulfonic acid groups can be introduced and a vinyl monomer having a halogen at a terminal are co-grafted into a polymer base film that has been exposed to an ionizing radiation, and the base film is exposed again to an ionizing radiation and/or heat treated so that the terminal halogen is eliminated to introduce a crosslinking structure in which the graft molecular chains are bound together.

**EP 1 742 286 A1**

**Description**

This invention relates to an electrolyte membrane suitable for use in solid polymer membrane fuel cells. Particularly, this invention relates to a polymer ion-exchange membrane that is given higher durability by means of its crosslinking structure.

Solid polymer electrolyte membrane fuel cells feature high energy density, so they have potential use in a wide range of applications including power supplies to household cogeneration systems, mobile communication devices and electric cars, and convenient auxiliary power supplies. This type of fuel cell requires that a long-lived and durable polymer ion-exchange membrane be used as an electrolyte.

In a solid polymer membrane fuel cell, the ion-exchange membrane functions as an electrolyte for conducting protons and it also plays a part of a diaphragm which prevents mixing of the fuel hydrogen or methanol with oxygen. The ion-exchange membrane which plays a part of an electrolyte causes a large electric current to flow over a prolonged period, so it has several requirements to meet: high chemical stability, in particular, high stability in acidic aqueous solution (acid resistance), good resistance to peroxide radicals or the like (oxidation resistance) and good heat resistance, as well as low electrical resistance. In addition, the ion-exchange membrane which also plays a part of a diaphragm is required to have high mechanical strength and dimensional stability, as well as low permeability of the fuel hydrogen gas or methanol and oxygen gas.

A common example of ion-exchange membranes that satisfies those performance requirements to some extent has been a perfluorosulfonic acid-based membrane developed by DuPont Nafion®.

The conventional perfluoropolymer ion-exchange membranes such as Nafion® have outstanding chemical stability but, having no crosslinking structure, they are only insufficient in dimensional stability and will swell in a wet state; in particular, if methanol is used for fuel, the membrane will swell in alcohols and the resulting cross-over of methanol contributes to lowering the characteristics of the fuel cell.

An ion-exchange membrane that features suppressed swelling in a wet state has been proposed in JP 2001-348439 A; to synthesize the membrane, a styrene monomer is introduced into a polyolefin or a fluoropolymer base matrix by a radiation-induced graft reaction and the polystyrene grafts are then sulfonated. The patent application also proposes the use of a preliminarily crosslinked base.

An electrolyte membrane comprising a porous base impregnated with an ion-exchange resin has also been proposed (see JP 8-329962 A); however, if the resulting electrolyte membrane is incorporated in a fuel cell, the ion-exchange resin will swell during cell operation and if the operation is prolonged, it will dissolve, causing the cell output to drop.

The present invention has been accomplished in order to eliminate the biggest difficulty with the polymer ion-exchange membrane conventionally used in fuel cells, i.e. the membrane will swell in a wet state, causing the fuel gas or oxygen to "cross over" to the counter electrode, and reducing the membrane's mechanical and dimensional stability. The polymer ion-exchange membrane of the present invention is useful as an electrolyte membrane.

In one aspect, the present invention provides a polymer electrolyte membrane that has been rendered more stable in methanol by introducing a crosslinking structure that makes the membrane suitable for use in solid polymer membrane fuel cells.

In another aspect, the present invention provides a process for producing the polymer electrolyte membrane.

The present inventors conducted intensive studies on a method comprising the steps of irradiating a polymer film, subjecting the irradiated polymer film to multiplex graft polymerization so that various monomers are simultaneously grafted into the polymer film, and then introducing sulfonic acid groups into the resulting graft chains. As a result, it was found that by selecting certain specific vinyl monomers having a halogen at a terminal, a polymer electrolyte membrane could be produced that had a crosslinking structure introduced into graft molecular chains to suppress the cross-over of the fuel gas and oxygen to the counter electrode while improving the membrane's dimensional stability.

The present invention provides a polymer electrolyte membrane produced by a process in which a monofunctional vinyl monomer into which sulfonic acid groups can be introduced and a vinyl monomer having a halogen at a terminal are co-grafted into a polymer base film that has been exposed to an ionizing radiation, and the base film is irradiated again and/or heat treated so that the terminal halogen is eliminated to introduce a crosslinking structure in which the graft molecular chains are bound together.

In a preferred embodiment, the two vinyl monomers may be combined with at least one polyfunctional monomer which serves as a crosslinking agent.

In another preferred embodiment, the introduction of a crosslinking structure into the graft chains may be followed by another exposure to an ionizing radiation so that the polymer base film is crosslinked with the crosslinked graft chains.

In the method of the present invention, the monofunctional vinyl monomer into which sulfonic acid groups can be introduced and the copolymerizable vinyl monomer having a halogen at a terminal are co-grafted into the polymer base film and a suitable post-treatment is performed to introduce crosslinking into the graft chains. To be more specific, the post-treatment eliminates the halogen while introducing crosslinking into the graft chains. If the polyfunctional vinyl monomer is used as a crosslinking agent, crosslinking is introduced not only in the graft chains but also in the polymer's backbone chain, thereby assuring the introduction of even stronger crosslinking.

Having the crosslinking structure introduced in the manner described above, the polymer electrolyte membrane produced by the method of the present invention does not swell in a wet state and offers the following characteristic advantage: when it is used as an electrolyte membrane in a fuel cell, the fuel gas or oxygen will not "cross over" to the counter electrode, and the high mechanical strength of the membrane contributes high dimensional stability to it, whereby the electrolyte membrane becomes longer-lived and more durable as a polymer ion-exchange membrane.

The polymer base film that can be employed in the present invention may be exemplified by: (1) fluoropolymer base films such as those made of polytetrafluoroethylene, tetrafluoroethylene-co-hexafluoropropylene, and tetrafluoroethylene-co-perfluoroalkylvinyl ether; (2) fluorocarbon-hydrocarbon containing polymer base films such as those made of poly(vinylidene fluoride) and ethylene-co-tetrafluoroethylene; and (3) hydrocarbon-containing base films such as high-molecular weight polyethylene, polypropylene, polystyrene, polyamide, aromatic polyamide, polyethylene terephthalate, polyethylene naphthalate, polycarbonate, polyether ketone, polyether ether ketone, polyether sulfone, polyphenylene sulfide, and polysulfone, as well as polyimide-based polymer films such as those made of polyimide, polyether imide, polyamide imide, polybenzoimidazole, and polyether ether imide. These polymer base films may be preliminarily crosslinked before grafting of monomers.

The vinyl monomers that are grafted into the polymer base films in the present invention may be selected from among the following three groups.

(1) Group A (monofunctional vinyl monomer into which sulfonic acid groups can be introduced):

a monomer selected from the group consisting of 1) styrene; 2) alkylstyrenes such as methylstyrenes (e.g., $\alpha$-methylstyrene and vinyltoluene), ethylstyrene, dimethylstyrene, trimethylstyrene, pentamethylstyrene, diethylstyrene, isopropylstyrene, and butylstyrene (e.g., 3-tert-butylstyrene and 4-tert-butylstyrene); 3) halogenated styrenes such as chlorostyrene, dichlorostyrene, trichlorostyrene, bromostyrenes (e.g., 2-bromostyrene, 3-bromostyrene, and 4-bromostyrene), and fluorostyrenes (e.g., 2-fluorostyrene, 3-fluorostyrene, and 4-fluorostyrene); 4) alkoxystyrenes such as methoxystyrene, methoxymethylstyrene, dimethoxystyrene, ethoxystyrene, and vinylphenylallyl ether; 5) hydroxystyrene derivatives such as hydroxystyrene, methoxyhydroxystyrene, acetoxystyrene, and vinylbenzyl alkylethers; 6) carboxystyrene derivatives such as vinyl benzoate and formylstyrene; 7) nitrostyrenes such as nitrostyrene; 8) aminostyrene derivatives such as aminostyrene and dimethylaminostyrene; and 9) ion-containing styrene derivatives such as vinyl benzylsulfonates and styrene sulfonyl fluorides.

(2) Group B (vinyl monomers having a halogen at a terminal):

a monomer selected from the group consisting of 1-iodo-2,2-difluoroethane ($CF_2$=CH-I), 1-bromo-2,2-difluoroethane ($CF_2$=CH-Br), trifluoroiodoethane ($CF_2$=CF-I), trifluorobromoethane ($CF_2$=CF-Br), 4-iodo-3,3,4,4-tetrafluorobutane ($CH_2$=CH-$CF_2$-$CF_2$-I), 4-bromo-3,3,4,4-tetrafluorobutane ($CH_2$=CH-$CF_2$-$CF_2$-Br), 3-iodo-3,3-difluoropropene ($CH_2$=CH-$CF_2$-I), 3-iodo-3,3-difluoropropene ($CH_2$=CH-$CF_2$-Br), 4-iodo-1,1,2-trifluorobutane ($CF_2$=CF-$CH_2$-$CH_2$-I), 4-bromo-1,1,2-trifluorobutane ($CF_2$=CF-$CH_2$-$CH_2$-Br), 6-iodo-1,1,2-trifluorohexane ($CF_2$=CF-$CH_2$-$CH_2$-$CH_2$-I), 6-bromo-1,1,2-trifluorohexane ($CF_2$-CF-$CH_2$-$CH_2$-$CH_2$-Br), 2-iodotetrafluoroethyl trifluorovinyl ether ($CF_2$=CF-O-$CF_2$-$CF_2$-I), and 2-bromotetrafluoroethyl trifluorovinyl ether ($CF_2$=CF-O-$CF_2$-$CF_2$-Br).

(3) Group C (polyfunctional vinyl monomers):

a monomer (to be used as a crosslinking agent) selected from the group consisting of bis(vinylphenyl)ethane, divinylbenzene, 2,4,6-triallyloxy-1,3,5-triazine (triallyl cyanurate), triallyl-1,2,4-benzene tricarboxylate (triallyl trimellitate), diallyl ether, triallyl-1,3,5-triazine-2,4,6 (1H,3H,5H)-trione, 2,3-diphenylbutadiene, 1,4-diphenyl-1,3-butadine, 1,4-divinyloctafluorobutane, bis(vinylphenyl)methane, divinylacetylene, divinyl sulfide, divinyl sulfone, divinyl ether, divinyl sulfoxide, isoprene, 1,5-hexadiene, butadiene, and 1,4-divinyl-2,3,5,6-tetrachlorobenzene.

The monomers listed above are grafted into the polymer base film by the so-called pre-irradiation, post-graft polymerization method, which is performed in the following manner. The polymer base film is put into a stainless steel or glass pressure-resistant vessel; after drawing a sufficient vacuum, monomers preliminarily deprived of oxygen gas by means of bubbling with an inert gas or freeze-degassing are charged into the vessel; the substrate is irradiated with $\gamma$-rays from $^{60}$Co at room temperature in an inert gas to a total dose of 5-500 kGy and then contacted by the monomers to induce a graft reaction. Graft polymerization is performed at temperatures not higher than the boiling points of the monomers or the solvent used, which are typically between 0°C and 150°C. Since the presence of oxygen retards the graft reaction, the sequence of operations described above are performed in an inert gas such as argon gas or nitrogen gas and the monomers as well as their solutions in a solvent are used after they have been deprived of oxygen by the usual treatment (bubbling with an inert gas or freeze-degassing).

The degree of grafting can be controlled by the dose of radiation applied to create the necessary active sites (radicals) for causing the monomers to react with the polymer base film, and by the conditions (i.e., temperature and time) of reaction involving the contact between the polymer base film having the created active sites and the monomers. Usually, the degree of grafting is higher at increasing dose of radiation, or at higher grafting temperature, or as the grafting time is extended.

The ionizing radiation to be used is preferably $\gamma$-rays or X-rays having high penetrating power or electron beams having sufficiently high energy to penetrate the irradiation vessel, the base film or the monomer solution.

In order to introduce sulfonic acid groups into the polymer base film to which the monomers have been grafted, various solutions may be used, as exemplified by a solution of chlorosulfonic acid in dichloroethane or chloroform, a concentrated sulfuric acid solution, and a fuming sulfuric acid solution.

The ion-exchange capacity of the electrolyte membrane that is produced in the present invention can be varied by controlling the amount of grafts and the amount of sulfonation reaction, namely, the quantity of the sulfonic acid groups introduced.

To introduce a crosslinked structure, the polymer base film having the grafted molecular chains is exposed to a radiation. Alternatively, if a fluorocarbon-hydrocarbon containing monomer having a halogen at a terminal is used, the base film is heat treated with a temperature of up to 120°C and if a fluorocarbon-containing monomer having a halogen at a terminal is used, the substrate is heat-treated at a temperature of up to 160°C. By these treatments, the terminal iodine or bromine in the grafted molecular chains is eliminated, causing the adjacent grafted molecular chains to bind together.

Methanol is one of the current fuel candidates for use in fuel cells. However, Nafion® which is a perfluorosulfonic acid-based membrane does not have any crosslinking structure between the molecular chains and will swell significantly in the fuel methanol which then diffuses from the anode (fuel electrode) to the cathode (air electrode) through the membrane; this phenomenon, commonly called "fuel cross-over", is a serious problem since it lowers the efficiency of power generation.

However, in the polymer electrolyte membrane produced by the present invention, the grafted molecular chains formed by introducing the sulfonic acid groups crosslink with the polymer base film to create a structure that will not readily swell and the membrane undergoes hardly recognizable swelling in alcohols including methanol. Therefore, the membrane finds particular use in a direct-methanol fuel cell, or a fuel cell that can utilize methanol directly for fuel without using a reformer.

As described above, the polymer electrolyte membrane produced by the present invention has a crosslinking structure introduced among the grafted molecular chains and it also has such a crosslinking structure introduced to crosslink the grafted molecular chains with the polymer base film; as a result, the electrolyte membrane of the present invention has outstanding dimensional stability and methanol resistance and, in addition, the ion-exchange capacity which is an important property of the membrane can be controlled over a broad range.

EXAMPLES

On the following pages, the present invention is described with reference to examples and comparative examples, to which the present invention is by no means limited. The various parameters referred to in those examples and comparative examples were measured by the following methods.

(1) Degree of grafting (%)

If the base film is taken as the backbone chain portion and that portion of the base film to which a fluorine-containing monomer, a hydrocarbon-containing monomer and the like have been grafted is taken as the graft chain portion, the weight ratio of the graft chain portion to the backbone chain portion is expressed as the degree of grafting ($X_{dg}$ [wt%]) by the following equation:

$$X_{dg} = 100(W_2 - W_1)/W_1$$

$W_1$: the weight (g) of the base film in a dry state before grafting
$W_2$: the weight (g) of the base film in a dry state after grafting

(2) Ion-exchange capacity (meq/g)

The ion-exchange capacity (IEC) of a membrane is expressed by the following equation:

$$\texttt{IEC = [n(acid group)}_{\texttt{obs}}\texttt{]/W}_{\texttt{d}}$$

$[n(acid\ group)_{obs}]$: the amount of acid groups (mM) in the ion-exchange membrane

$W_d$: the dry weight (g) of the ion-exchange membrane

In order to ensure accuracy in the measurement of $[n(acid\ group)_{obs}]$, the membrane was immersed again in 1M sulfuric acid solution at 50°C for 4 hours until it was completely converted to an acid form (H-form). Thereafter, the membrane was immersed in a 3M aqueous NaCl solution at 50°C for 4 hours until it was converted to a $-SO_3Na$ form; the replaced protons ($H^+$) were subjected to neutral titration with 0.2M NaOH to determine the concentration of acid groups.

(3) Degree of area swelling (%)

The electrolyte membrane was immersed in a 30% methanol solution at 80°C; after 24 hours, membrane was recovered from the methanol solution and its area ($S_1$) was determined; the membrane was then dried with a vacuum dryer and its area ($S_0$) was measured. The degree of the membrane's swelling in terms of area (%) is expressed by the following equation.

$$\texttt{S = 100(S}_1\texttt{/S}_0\texttt{)}$$

$S_0$: the membrane's area ($cm^2$) in a dry state
$S_1$: the membrane's area ($cm^2$) in a wet state.

(4) Methanol permeation coefficient P ($cm^2$/S)

The electrolyte membrane was set in a position that would divide a glass cell into two compartments A and B. Compartment A was filled with 100 mL of a 10M methanol solution and compartment B with 100 mL of purified water. The cell was then set in a drier controlled at 80°C and the solutions in the two compartments were each agitated with a stirrer at a constant rate. The solution in compartment B was sampled at predetermined time intervals and its methanol concentration (M) was measured with a methanol concentration meter. The methanol permeation coefficient P ($cm^2$/S) is expressed by the following equation.

$$P = \frac{V \times d}{(M_{MeOH} - M_{H2O}) \times S} \times \frac{dM_{H2O}}{dt}$$

V: the volume of the solution (100 $cm^3$)
d: the thickness of the membrane (cm)
S: the area of contact ($cm^2$) between the membrane and the solution
$M_{MeOH}$: the concentration of methanol (M) in compartment A at time t.
$M_{H2O}$: the concentration of methanol (M) in compartment B at time t.

(Example 1)

A film of ethylene-co-tetrafluoroethylene (hereinafter abbreviated as ETFE) was cut to a size of 2 cm by square and put into a separable glass container (3 cm i.d. x 15 cm high) equipped with a cock; after degassing, the interior of the container was replaced with argon gas. Under this condition, the ETFE film was irradiated with γ-rays from a $^{60}$Co

source at room temperature for a total dose of 30 kGy at a dose rate of 10 kGy/hr. Subsequently, the same glass container was charged with 10 mL of a preliminarily degassed 30 wt% solution of monomers (styrene/1-bromo-2,2-difluoroethane) as diluted with 60 wt% toluene, and the film was immersed in this solution. After purging with argon gas, the glass container was closed and heated to 50°C where reaction was performed for 4 hours. The resulting graft polymerized membrane was washed with toluene and dried. The degree of grafting was found to be 23%.

The graft polymerized membrane was charged into a separable glass container (3 cm i.d. x 20 cm high) equipped with a cock; after degassing, the membrane was treated at a temperature of 80°C for 24 hours to crosslink the grafted molecular chains.

To be sulfonated, the crosslinked graft polymerized membrane was immersed in 0.2M chlorosulfonic acid as diluted with 1,2-dichloroethane, where reaction was performed at 60°C for 6 hours and the membrane was hydrolyzed by washing with water. The polymer electrolyte membrane prepared in Example 1 was measured for ion-exchange capacity, degree of area swelling, and methanol permeation coefficient. The results are shown in Table 1.

(Example 2)

The ETFE base film used in Example 1 was put into a glass ampoule and, after degassing to create a vacuum in it, the glass ampoule was fused to seal and irradiated with $\gamma$-rays from a $^{60}$Co source at room temperature for a total dose of 500 kGy at a dose rate of 20 kGy/hr so that crosslinking was introduced into the base film. Subsequently, monomers (styrene/1-bromo-2,2-difluoroethane) were grafted into the base film as in Example 1. The degree of grafting was found to be 25%. The resulting graft membrane was sulfonated under the same conditions as described in Example 1. The results are shown in Table 1.

(Example 3)

Graft polymerization was performed as in Example 1; the resulting graft polymerized membrane was put into a glass ampoule and, after degassing to create a vacuum in it, the glass ampoule was fused to seal and irradiated with $\gamma$-rays from a $^{60}$Co source at room temperature for a total dose of 500 kGy at a dose rate of 20 kGy/hr so that crosslinking was introduced into the base film. The degree of grafting was found to be 22%. The resulting graft membrane was sulfonated under the same conditions as described in Example 1. The results are shown in Table 1.

(Example 4)

In addition to the monomers (styrene/1-bromo-2,2-difluoroethane) used in Example 1, divinylbenzene was used as a crosslinking agent and graft polymerization was performed as in Example 1. The degree of grafting was found to be 24%. The resulting graft membrane was sulfonated under the same conditions as described in Example 1. The results are shown in Table 1.

(Example 5)

The monomers used in Example 1 were replaced by styrene/4-bromo-1,1,2-trifluorobutane and graft polymerization was performed as in Example 1. The degree of grafting was found to be 20%. The resulting graft membrane was sulfonated under the same conditions as described in Example 1. The results are shown in Table 1.

(Comparative Example 1)

The procedure of Example 1 was repeated except that graft polymerization was not followed by the heat treatment but sulfonation immediately followed under the same conditions as in Example 1.

(Comparative Example 2)

Nafion® (DuPont) was measured for ion-exchange capacity, degree of area swelling, and methanol permeation coefficient. The results are shown in Table 1.

Table 1. Characteristics of Polymer Electrolyte Membranes

| | Degree of grafting (%) | Ion-exchange capacity (meq/g) | Degree of area swelling (%) | Methanol permeation coefficient ($cm^2/s$) |
|---|---|---|---|---|
| Example 1 | 23 | 1.0 | 170 | 1.4 |
| Example 2 | 25 | 0.9 | 158 | 1.1 |
| Example 3 | 22 | 0.9 | 142 | 0.8 |
| Example 4 | 24 | 1.1 | 135 | 0.5 |
| Example 5 | 20 | 1.0 | 153 | 1.7 |
| Comparative Example 1 | 23 | 1.0 | 195 | 2.3 |
| Comparative Example 2 | — | 0.9 | 250 | 12.0 |

The application of the long-lived durable polymer ion-exchange membrane of the present invention is not limited to use as a electrolyte membrane in fuel cells; it also has potential use as an electrolyte membrane in power supplies to household cogeneration systems, mobile communication devices and electric cars, and convenient auxiliary power supplies.

**Claims**

1.  A process for producing a polymer electrolyte membrane, in which a monofunctional vinyl monomer into which sulfonic acid groups can be introduced and a vinyl monomer having a halogen at a terminal are co-grafted into a polymer base film that has been exposed to γ-rays, X-rays or electron beams as an ionizing radiation, and the base film is exposed again to an ionizing radiation and/or heat-treated so that the terminal halogen is eliminated to introduce a crosslinking structure among the graft chains, which are then sulfonated.

2.  The process according to claim 1, wherein the two vinyl monomers are combined with at least one polyfunctional monomer which serves as a crosslinking agent.

3.  The process according to claim 1 or 2, wherein the polymer base film has a crosslinking structure introduced therein by preliminary exposure to an ionizing radiation.

4.  The process according to any one of claims 1-3, wherein the introduction of a crosslinking structure among the graft chains is followed by another exposure to an ionizing radiation so that the polymer base film is crosslinked with the crosslinked graft chains.

5.  The process according to any one of claims 1-4, wherein a fluorine-containing polymer film, a fluorocarbon-hydrocarbon containing polymer film, and/or a hydrocarbon-containing polymer film is used as the polymer base film.

6.  A crosslinked electrolyte membrane produced by a process in which a monofunctional vinyl monomer into which sulfonic acid groups can be introduced and a vinyl monomer having a halogen at a terminal are introduced by graft copolymerization into a polymer base film that has been exposed to γ-rays, X-rays or electron beams as an ionizing radiation, and thereafter the base film is exposed again to an ionizing radiation and/or heat-treated so that a crosslinking structure is introduced into the graft chains.

7.  The electrolyte membrane according to claim 6, wherein the two vinyl monomers are combined with at least one polyfunctional monomer which serves as a crosslinking agent.

**European Patent Office**

## EUROPEAN SEARCH REPORT

Application Number

EP 06 01 1865

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | JP 2001 348439 A (JAPAN ATOMIC ENERGY RES INST) 18 December 2001 (2001-12-18) * abstract * | 1-7 | INV. H01M8/02 H01M4/88 H01M8/10 |
| X | JP 11 250921 A (AISIN SEIKI) 17 September 1999 (1999-09-17) * abstract * | 1-7 | |
| D,X | JP 08 329962 A (JAPAN GORE TEX INC) 13 December 1996 (1996-12-13) * abstract * | 1-7 | |
| Y | BUCHI F N ET AL: "RADIATION GRAFTED AND SULFONATED (FEP-G-POLYSTYRENE) - AN ALTERNATIVE TO PERFLUORINATED MEMBRANES FOR PEM FUEL CELLS?" CONVERSION TECHNOLOGIES ELECTROCHEMICAL CONVERSIONS. SAN DIEGO, AUG. 3, vol. VOL. 3 CONF. 27, 3 August 1992 (1992-08-03), pages 3419-3424, XP000406789 ISBN: 0-7803-0693-7 * see p.3420, left col. first par., par. bridging p.3422/3423 *  * * the whole document * | 1-7 | TECHNICAL FIELDS SEARCHED (IPC)  H01M |
| Y | US 5 994 426 A (NEZU SHINJI [JP] ET AL) 30 November 1999 (1999-11-30) * see col.3, l.26- col.51, claims * * the whole document * | 1-7 | |
| Y | US 5 817 718 A (NEZU SHINJI [JP] ET AL) 6 October 1998 (1998-10-06) * see col.3, l.24 - col.6, l.15,.claims * * the whole document * | 1-7 | |
| | -/-- | | |

The present search report has been drawn up for all claims

| Place of search | Date of completion of the search | Examiner |
|---|---|---|
| Munich | 29 November 2006 | Stellmach, Joachim |

EPO FORM 1503 03.82 (P04C01)

EP 1 742 286 A1

**European Patent Office**

**EUROPEAN SEARCH REPORT**

Application Number

EP 06 01 1865

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | BUCHI F N ET AL: "Study of radiation-grafted FEP-g-polystyrene membranes as polymer electrolytes in fuel cells" ELECTROCHIMICA ACTA, ELSEVIER SCIENCE PUBLISHERS, BARKING, GB, vol. 40, no. 3, February 1995 (1995-02), pages 345-353, XP004020029 ISSN: 0013-4686 * see p.346, left col. * * the whole document * | 1-7 | |
| Y | HUSLAGE J ET AL: "Radiation-grafted membrane/electrode assemblies with improved interface" ELECTROCHIMICA ACTA, ELSEVIER SCIENCE PUBLISHERS, BARKING, GB, vol. 48, no. 3, 11 December 2002 (2002-12-11), pages 247-254, XP004391825 ISSN: 0013-4686 * see p.247, right col. * * the whole document * | 1-7 | |

TECHNICAL FIELDS SEARCHED (IPC)

The present search report has been drawn up for all claims

| Place of search | Date of completion of the search | Examiner |
|---|---|---|
| Munich | 29 November 2006 | Stellmach, Joachim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

9

**ANNEX TO THE EUROPEAN SEARCH REPORT
ON EUROPEAN PATENT APPLICATION NO.**
EP 06 01 1865

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2006

| Patent document cited in search report | | Publication date | Patent family member(s) | | Publication date |
|---|---|---|---|---|---|
| JP 2001348439 | A | 18-12-2001 | NONE | | |
| JP 11250921 | A | 17-09-1999 | NONE | | |
| JP 8329962 | A | 13-12-1996 | JP 3481010 | B2 | 22-12-2003 |
| US 5994426 | A | 30-11-1999 | NONE | | |
| US 5817718 | A | 06-10-1998 | JP 9102322 | A | 15-04-1997 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001348439 A
- JP 8329962 A